# EUROPÄISCHE PATENTANMELDUNG

(11) **EP 1 125 777 A2**
(43) Veröffentlichungstag der Anmeldung: **22.08.2001**
(21) Anmeldenummer: 00122038.3
(22) Anmeldetag: 11.10.2000
(51) Int. Cl.: B60H 1/34

(54) **Vorrichtung zur Steuerung einer aus einem Luftführungskanal einer Belüftungs- und/oder Klimaanlage austretenden Luftströmung, insbesondere für Fahrzeuge**

(30) Priorität: 17.02.2000 DE 10007154
(71) Anmelder: Bayerische Motoren Werke Aktiengesellschaft, 80809 München (DE)
(72) Erfinder: Hofhaus, Jörn, Dr., 85356 Freising (DE)

(57) **Zusammenfassung**

Für eine Vorrichtung zur Steuerung einer aus einem Luftführungskanal einer Belüftungs- und/oder Klimaanlage austretenden Luftströmung, insbesondere für Fahrzeuge, umfassend schwenkbeweglich angeordnete Lamellen (4), wird zur Erzielung strömungsgünstiger Lamellen vorgeschlagen, dass diese im Querschnitt ein Tropfen- oder Flügelprofil aufweisen mit einer konvexen Außenseite und einer konkaven Innenseite, wobei eine Profilsehne des abströmseitigen, sich verjüngenden Profil- bzw. Lamellenabschnittes gegenüber einer Profilsehne des zuströmseitigen, stromauf sich verdichtenden Profil- bzw. Lamellenabschnittes (4') abgewinkelt angeordnet ist.

## Beschreibung

Die Erfindung bezieht sich nach dem Oberbegriff des Patentanspruches 1 auf eine Vorrichtung zur Steuerung einer aus einem Luftführungskanal einer Belüftungs- und/oder Klimaanlage austretenden Luftströmung, insbesondere für Fahrzeuge, umfassend um eine jeweilige Achse schwenkbeweglich angeordnete Lamellen, die jeweils einen relativ zu einem zuströmseitigen Lamellenabschnitt abgewinkelt angeordneten abströmseitigen Lamellenabschnitt aufweisen.

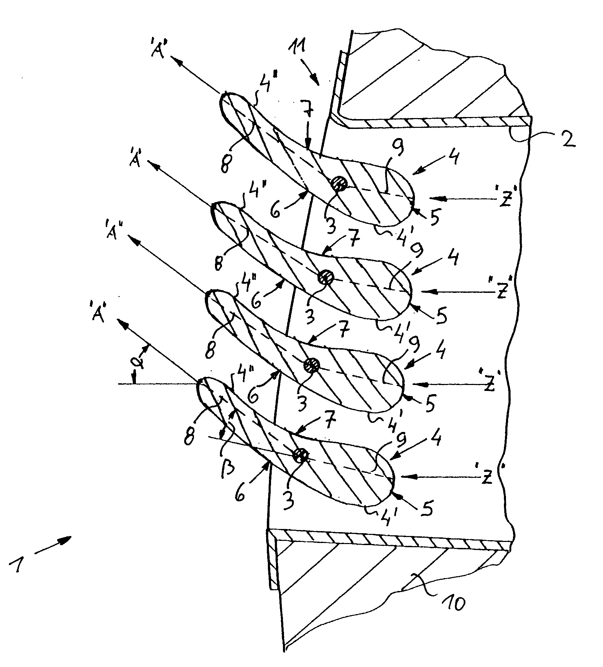

Bekanntlich ist mit geraden, zur Luftströmung im Luftführungskanal parallel ausrichtbaren Lamellen eine relativ verlustarme Ablenkung der austretenden Luft nur in engem Schwenkbereich der Lamellen möglich. Mit zunehmender Verschwenkung der geraden Lamellen wirken diese verstärkt als Sperrelemente mit nachteiligen Druckverlusten und steigender Geräuschbildung, wie dies beispielsweise zu Figur 4 in der DE 44 46 708 C2 beschrieben ist.

Die vorgenannten Nachteile können im wesentlichen mit einer aus der DE 40 12 359 C2 bekannten Vorrichtung zur Steuerung einer aus einem Luftführungskanal austretenden Luftströmung dadurch vermieden werden, dass die Lamellen aus einem biegeweichen Material gebildet sind und zur Änderung der Ausströmrichtung mittels einer Betätigungseinrichtung bogenförmig verformt sind. Nachteilig hierbei ist der erhebliche mechanische Aufwand zur Verformung der biegeweichen Lamellen.

Dieser bauaufwendige Nachteil kann mit der gattungsgemäßen Vorrichtung gemäß der weiter vorne bereits genannten DE 44 46 708 C2 durch den Einsatz von in Abströmrichtung abgewinkelten bzw. geknickten Lamellen umgangen werden. Nachteilig bei diesen Lamellen mit zueinander abgewinkelt angeordneten, geraden Lamellenabschnitten ist, dass die Profile der zuströmseitigen Lamellenabschnitte mit den Profilen der abströmseitigen Lamellenabschnitte auf den Oberseiten der Lamellen eine Abrisskante bilden, die strömungstechnisch unvorteilhaft ist.

Der Erfindung liegt die Aufgabe zugrunde, für eine gattungsgemäße Vorrichtung strömungsgünstigere Lamellen aufzuzeigen.

Diese Aufgabe ist mit dem Patentanspruch 1 dadurch gelöst, dass die Lamellen im Querschnitt ein Tropfen- oder Flügelprofil aufweisen mit einer konvexen Außenseite und eine konkaven Innenseite, wobei eine Profilsehne des abströmseitigen, sich verjüngenden Profil- bzw. Lamellenabschnittes gegenüber einer Profilsehne des zuströmseitigen, stromauf sich verdickenden Profil- bzw. Lamellenabschnittes abgewinkelt angeordnet ist.

Mit der Erfindung ist in vorteilhafter Weise erreicht, dass die Luftströmung auch bei stärkerer Ablenkung mittels der Lamellen an deren Ober- bzw. Außenseite anliegt und somit verlustbehaftete Ablösungen vermieden sind.

Zwar ist aus der DE 44 22 537 A1 eine Klappe für einen Luftführungskanal, insbesondere für Kraftfahrzeug-Heizungs- und/oder Klimaanlagen bekannt, die im Querschnitt die Form eines Tragflächenprofiles aufweist. Weiter ist aus der DE 197 33 319 A1 ein Heizungs- oder Klimagerät mit Luftleitschaufeln bekannt, die ein Flügelprofil aufweisen.

Keines der vorgenannten Dokumente enthält jedoch einen Hinweis, eine in Strömungsrichtung im Querschnitt geknickt ausgebildete Lamelle durch ein Flügelprofil zu ersetzen, dessen abströmseitiger Profilabschnitt über seine Profilsehne gegenüber der des zuströmseitigen Profilabschnittes abgewinkelt angeordnet ist.

In Ausgestaltung der Erfindung wird vorgeschlagen, dass die Lamellen um im wesentlichen horizontale Achsen schwenkbeweglich in einer in einem Armaturenbrett eines Fahrzeuges vorgesehenen Austrittsöffnung eines Luftführungskanals vorgesehen sind.

Da mit der vorteilhaften Formgebung der erfindungsgemäßen Lamelle eine wesentlich günstigere Umlenkung des Luftstrahles mit geringeren Strömungsverlusten erzielt ist, kann dies in vorteilhafter Weise für eine freiere Anordnung einer derartigen Vorrichtung insbesondere bei neuen Gestaltungen eines Armaturenbrettes genutzt werden. Damit kann auch eine gewünschte Komfortverbesserung erhalten bzw. gesteigert werden, was sowohl für die Belüftung als auch für die Klimatisierung gilt. Ferner ist auch die Geräuschbildung reduziert.

Die Erfindung ist anhand eines in der Zeichnung schematisch dargestellten Beispiels beschrieben.

Eine Vorrichtung 1 zur Steuerung einer aus einem Luftführungskanal 2 einer nicht gezeigten Belüftungs- und/oder Klimaanlage austretenden Luftströmung gemäß Pfeilen "A", insbesondere für Fahrzeuge, umfasst um eine jeweilige Achse 3 schwenkbeweglich angeordnete Lamellen 4, die jeweils einen relativ zu einem zuströmseitigen Lamellenabschnitt 4' um einen Winkel "β" abgewinkelt angeordneten abströmseitigen Lamellenabschnitt 4" aufweisen.

Zur Erzielung strömungsgünstiger Lamellen 4 weisen diese im Querschnitt ein Tropfen- oder Flügelprofil 5 auf mit einer konvexen Außenseite 6 und einer konkaven Innenseite 7, wobei eine Profilsehne 8 des abströmseitigen, sich verjüngenden Profil- bzw. Lamellenabschnittes 4" gegenüber einer Profilsehne 9 des zuströmseitigen, stromauf sich verdickenden Profil- bzw. Lamellenabschnittes 4' um den Winkel "β" abgewinkelt angeordnet ist.

Vorzugsweise sind die erfindungsgemäßen Lamellen 4 um im wesentlichen horizontale Achsen 3 schwenkbeweglich in einer in einem Armaturenbrett 10 eines nicht näher gezeigten Fahrzeuges vorgesehenen Austrittsöffnung 11 eines Luftführungskanals 2 angeordnet.

In der einzigen Figur ist mit "α" der Ablenkwinkel der ausströmenden Luft gemäß Pfeil "A" relativ zur zuströmenden Luft gemäß dem Pfeil "Z" angegeben.

## Patentansprüche

1. Vorrichtung zur Steuerung einer aus einem Luftführungskanal einer Belüftungs- und/oder Klimaanlage austretenden Luftströmung, insbesondere für Fahrzeuge,
- umfassend um eine jeweilige Achse (3) schwenkbeweglich angeordnete Lamellen (4), die
- jeweils einen relativ zu einem zuströmseitigen Lamellenabschnitt (4') abgewinkelt angeordneten abströmseitigen Lamellenabschnitt (4") aufweisen,
**dadurch gekennzeichnet,**
- dass die Lamellen (4) im Querschnitt ein Tropfen- oder Flügelprofil (5) aufweisen mit einer konvexen Außenseite (6) und einer konkaven Innenseite (7), wobei
- eine Profilsehne (8) des abströmseitigen, sich verjüngenden Profil- bzw. Lamellenabschnittes (4") gegenüber einer Profilsehne (9) des zuströmseitigen, stromauf sich verdickenden Profil- bzw. Lamellenabschnittes (4') abgewinkelt angeordnet ist.

2. Vorrichtung nach Anspruch 1, **dadurch gekennzeichnet,** dass die Lamellen (4) um im wesentlichen horizontale Achsen (3) schwenkbeweglich in einer in einem Armaturenbrett (10) eines Fahrzeuges vorgesehenen Austrittsöffnung (11) eines Luftführungskanals (2) angeordnet sind.
